# EUROPEAN PATENT APPLICATION

(11) **EP 4 746 260 A1**
(43) Date of publication of application: **20.05.2026**
(21) Application number: 24839354.8
(22) Date of filing: 31.05.2024
(51) Int. Cl.: H02K 5/10, H02K 5/18

(54) **MOTOR**

(30) Priority: 12.07.2023 JP 2023114775
(71) Applicant: Panasonic Intellectual Property Management Co., Ltd., Kadoma-shi, Osaka 571-0057 (JP)
(72) Inventor: HAMATANI, Takuto, Kadoma-shi, Osaka 571-0057 (JP)
(74) Representative: SSM Sandmair
(86) International application number: PCT/JP2024/019975
(87) International publication number: WO 2025/013457

(57) **Abstract**

A motor comprises: a rotor including a rotary shaft extending in an axial direction, the axial direction being a direction that a center axis extends; a bracket including a first through hole that the rotary shaft passes through; a first cover including a second through hole that the rotary shaft passes through, the first cover being an inner cover fixed to the bracket; and a second cover fixed to the rotary shaft, the second cover being an outer cover covering the first cover, the first cover includes a plurality of outer protrusions protruding outward on a surface of a side of the second cover, the second cover includes a plurality of inner protrusions protruding inward on a surface of a side of the first cover, the plurality of outer protrusions include a first outer protrusion and a second outer protrusion that protrude in directions different from each other, the plurality of inner protrusions include a first inner protrusion and a second inner protrusion that protrude in directions different from each other, the first outer protrusion and the first inner protrusion face each other, and the second outer protrusion and the second inner protrusion face each other.

## Description

### TECHNICAL FIELD

The present disclosure relates to a motor.

### BACKGROUND ART

A motor is used in various electric devices such as household devices including, for example, an air conditioner and a washing machine, or industrial devices. A motor includes a rotor having a rotary shaft, a stator that generates a magnetic force for rotating the rotor, a bearing that rotatably supports the rotary shaft, and a bracket that holds the bearing. The rotary shaft of the rotor is inserted into a through hole formed in the bracket. Since the rotary shaft rotates, a gap is formed between the rotary shaft inserted into the through hole of the bracket and an inner surface of the through hole. For this reason, there is a risk that foreign matter such as water or dust enters the motor through the gap. For example, when water or foreign matter enters the inside of the motor, the conductive portion is short-circuited or the lubricating oil of the bearing deteriorates.

Therefore, conventionally, a technique of attaching a cover to a rotary shaft, forming a convex portion to engage with an inner surface of the cover and an outer surface of a bracket, and providing a labyrinth structure has been proposed (see PTL 1).

However, in the motor disclosed in PTL 1, a special shape such as an uneven shape is required for a bracket serving as an exterior of the motor.

### Citation List

### Patent Literature

PTL 1: Unexamined Japanese Patent Publication No. 2016-116396

### SUMMARY OF THE INVENTION

The present disclosure has been made in order to solve such a problem. An object of the present disclosure is to provide a motor capable of suppressing intrusion of foreign matter such as water or dust into a bracket without providing a bracket with a labyrinth structure having a special shape.

In order to achieve the above object, one aspect of a motor according to the present disclosure comprises: a rotor including a rotary shaft extending in an axial direction, the axial direction being a direction that a center axis extends; a bracket including a first through hole that the rotary shaft passes through; a first cover including a second through hole that the rotary shaft passes through, the first cover being an inner cover fixed to the bracket; and a second cover fixed to the rotary shaft, the second cover being an outer cover covering the first cover, the first cover includes a plurality of outer protrusions protruding outward on a surface of a side of the second cover, the second cover includes a plurality of inner protrusions protruding inward on a surface of a side of the first cover, the plurality of outer protrusions include a first outer protrusion and a second outer protrusion that protrude in directions different from each other, the plurality of inner protrusions include a first inner protrusion and a second inner protrusion that protrude in directions different from each other, the first outer protrusion and the first inner protrusion face each other, and the second outer protrusion and the second inner protrusion face each other.

It is preferable that the bracket includes a bracket protrusion protruding outward, the bracket protrusion includes a bracket top plate part including the first through hole and a bracket side plate part erected from an outer peripheral end of the bracket top plate part, the first cover includes an inner top plate part including the second through hole and facing the bracket top plate part, and an inner side plate part erected from an outer peripheral end of the inner top plate part and facing the bracket side plate part, the second cover includes an outer top plate part facing the inner top plate part, and an outer side plate part erected from an outer peripheral end of the outer top plate part and facing the inner side plate part, the first outer protrusion is arranged on the inner top plate part, the second outer protrusion is arranged on the inner side plate part, the first inner protrusion is arranged on the outer top plate part, and the second inner protrusion is arranged on the outer side plate part.

It is preferable that the first outer protrusion and the first inner protrusion protrude in directions opposite to each other along a same orientation, and the second outer protrusion and the second inner protrusion protrude in directions opposite to each other along a same orientation.

It is preferable that in a case where a direction orthogonal to the axial direction is a radial direction and a direction inclined with respect to the axial direction and the radial direction is a tilt direction, each of the plurality of outer protrusions and the plurality of inner protrusions protrudes in one of the axial direction, the radial direction, and the tilt direction.

It is preferable that the first cover and the second cover are rubber covers made of a rubber material.

It is preferable that an elastic force of a rubber material forming the second cover is higher than an elastic force of a rubber material forming the first cover.

It is preferable that the second cover is fixed to the rotary shaft by press-fitting the rotary shaft into a third through hole formed in the second cover.

According to the present disclosure, it is possible to suppress intrusion of foreign matter such as water or dust into a motor without providing a bracket with a labyrinth structure having a special shape.

### BRIEF DESCRIPTION OF THE DRAWINGS

Fig. 1 is an external perspective view of a motor according to an exemplary embodiment.
Fig. 2 is an exploded perspective view of the motor according to the exemplary embodiment.
Fig. 3 is a cross-sectional view of the motor according to the exemplary embodiment taken along a plane passing through a rotary shaft.
Fig. 4 is a cross-sectional view of the motor according to the exemplary embodiment taken along a plane orthogonal to the rotary shaft.
Fig. 5 is a perspective view of a stator according to the exemplary embodiment.
Fig. 6 is a perspective view of a first cover and a second cover in a separated state as viewed obliquely from above.
Fig. 7 is a perspective view of the first cover and the second cover in a separated state as viewed obliquely from below.
Fig. 8 is a side view of the first cover and the second cover in a separated state.
Fig. 9 is an enlarged view of a region surrounded by a broken line in Fig. 3.
Fig. 10 is an enlarged cross-sectional view of a main part of a motor according to Modification 1.
Fig. 11 is an enlarged cross-sectional view of a main part of a motor according to Modification 2.
Fig. 12 is an enlarged cross-sectional view of a main part of a motor according to Modification 3.

### DESCRIPTION OF EMBODIMENT

Hereinafter, an exemplary embodiment of the present disclosure will be described with reference to the drawings. The exemplary embodiments to be described below illustrate specific examples of the present disclosure. Thus, numerical values, configuration elements, placement positions and connection forms of the configuration elements, steps, order of the steps, and the like, which are described in the following exemplary embodiment, are illustrative and are not to limit the scope of the present disclosure. Thus, among the constituent elements in the following exemplary embodiments, constituent elements that are not described in independent claims indicating the highest concept of the present disclosure are described as optional constituent elements.

Each of the drawings is a schematic view and is not necessarily exactly illustrated. In each drawing, substantially the same components as those in other drawings are denoted by the same reference numerals, and redundant description will be omitted or simplified.

In the present specification, a radial direction of stator 10 and rotor 20 is referred to as a "radial direction", and a rotation direction of rotor 20 is referred to as a "circumferential direction". That is, a direction extending from center axis C of rotary shaft 21, with center axis C as a center, is a "radial direction", and a direction around center axis C of rotary shaft 21, with center axis C as a center, is a "circumferential direction". Therefore, the "radial direction" is a direction orthogonal to a direction center axis C of rotary shaft 21 extends. In the present specification, terms "upper" and "lower" do not necessarily refer to an upward direction (vertically upward) and a downward direction (vertically downward) in terms of absolute space recognition.

### (Exemplary embodiment)

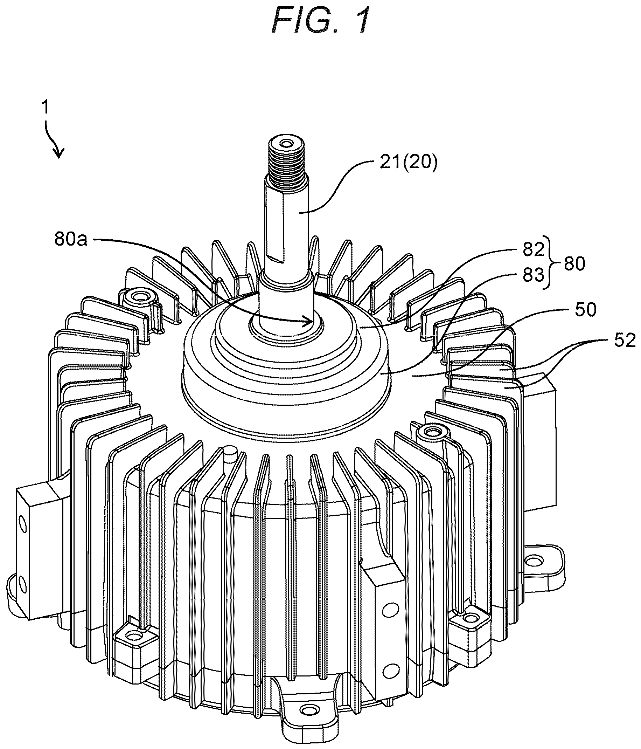

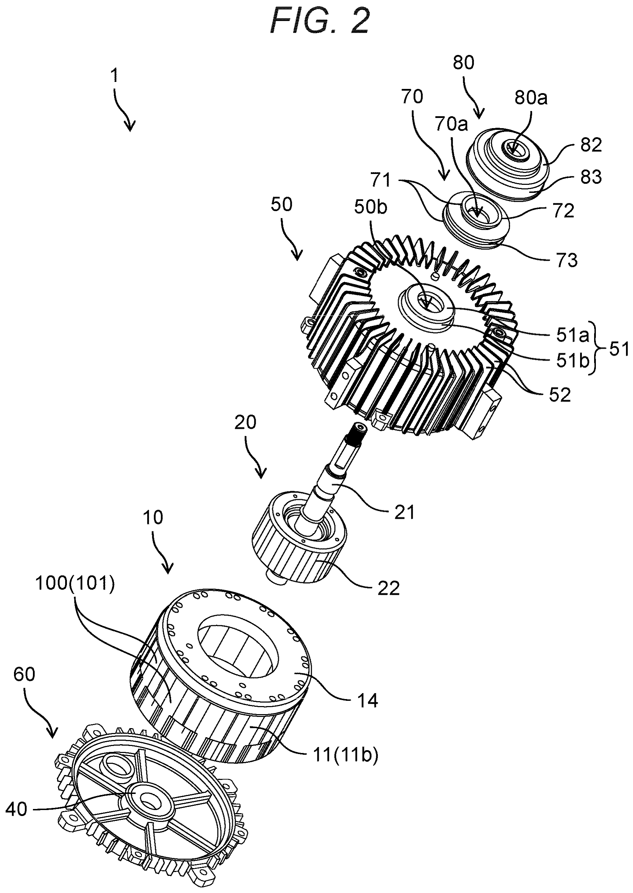

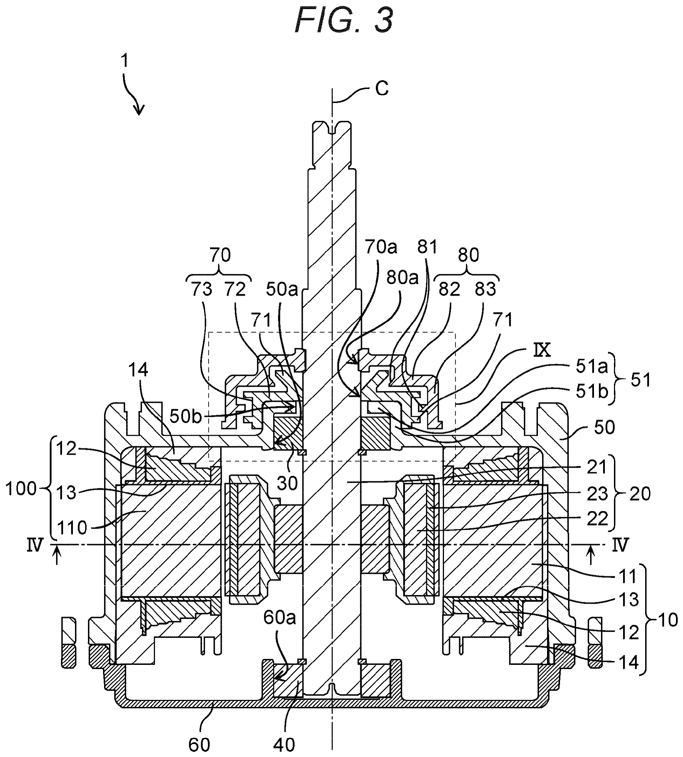

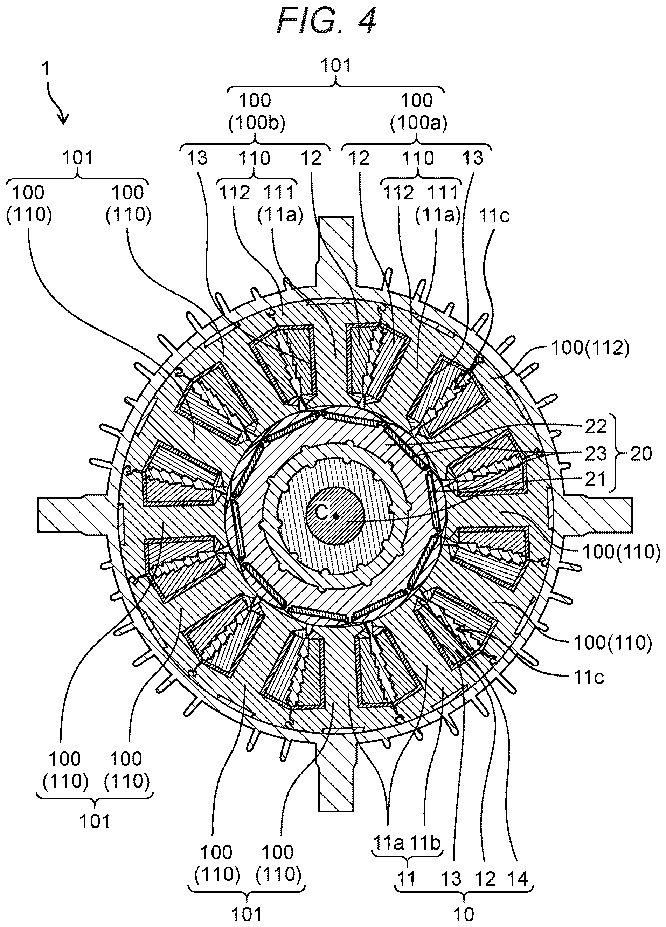

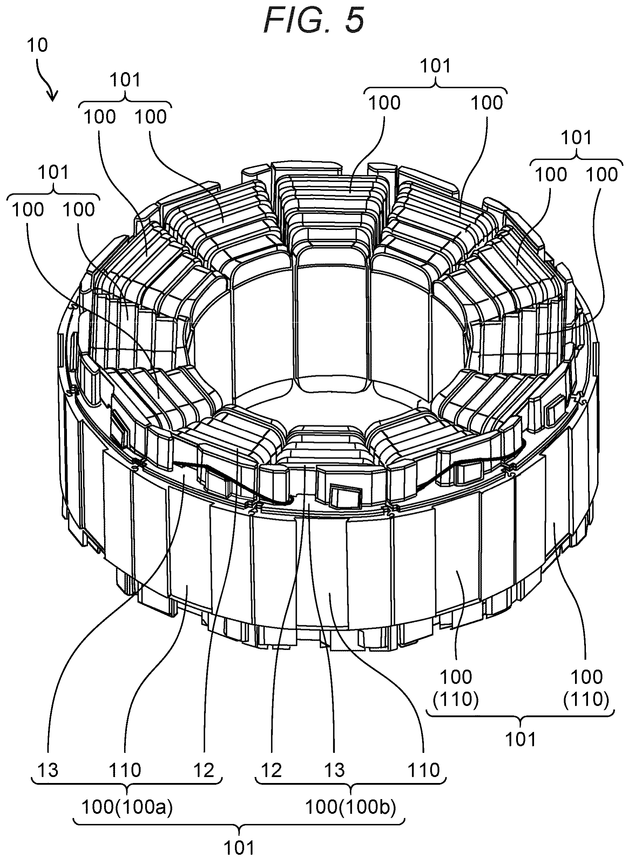

An overall configuration of motor 1 according to an exemplary embodiment will be described with reference to Figs. 1 to 5. Fig. 1 is an external perspective view of motor 1 according to an exemplary embodiment. Fig. 2 is an exploded perspective view of motor 1 according to the exemplary embodiment. Fig. 3 is a cross-sectional view of motor 1 according to the exemplary embodiment taken along a plane passing through rotary shaft 21. Fig. 4 is a cross-sectional view of motor 1 according to the exemplary embodiment taken along a plane orthogonal to rotary shaft 21. Fig. 4 illustrates a cross section taken along line IV-IV in Fig. 3. Fig. 5 is a perspective view of stator 10 according to the exemplary embodiment. In Figs. 3 to 5, coil 12 is schematically illustrated. In Figs. 3 and 4, only a portion appearing in the cross section is illustrated.

As illustrated in Figs. 1 to 4, motor 1 includes stator 10 and rotor 20 having rotary shaft 21. Motor 1 further includes first bearing 30, second bearing 40, first bracket 50, second bracket 60, first cover 70, and second cover 80.

Motor 1 is a brushless motor. As illustrated in Figs. 3 and 4, motor 1 is an inner rotor type motor that includes rotor 20 disposed inside stator 10. That is, stator 10 is disposed to surround rotor 20. Thus, rotor 20 rotates about center axis C of rotary shaft 21 as a rotation center inside stator 10.

As illustrated in Figs. 3 and 4, stator 10 is disposed facing rotor 20 with a minute air gap interposed between stator 10 and rotor 20. Specifically, stator 10 is disposed to surround rotor core 22 of rotor 20.

Stator 10 generates a magnetic force that acts on rotor 20. Specifically, stator 10 has a configuration having a plurality of N poles and S poles that are alternately and repeatedly present along a rotation direction to generate a magnetic flux on an air gap surface with rotor core 22 of rotor 20. Stator 10 forms a magnetic circuit together with rotor 20.

Stator 10 forms an armature. Stator 10 includes stator core 11 (stator iron core), coil 12 wound around stator core 11, and insulator 13. As illustrated in Figs. 2 to 4, stator core 11, coil 12, and insulator 13 are covered with molding resin 14. Fig. 5 illustrates stator 10 in a state before being covered with molding resin 14.

Stator core 11 is an iron core that generates a magnetic force for rotating rotor 20. As illustrated in Fig. 4, stator core 11 includes teeth 11a and yoke 11b. Stator core 11 includes a plurality of teeth 11a.

The plurality of teeth 11a are provided inside yoke 11b. Therefore, the plurality of teeth 11a protrude from yoke 11b toward rotor 20. That is, the plurality of teeth 11a protrude toward center axis C of rotary shaft 21. Specifically, the plurality of teeth 11a radially extend in a direction (radial direction) orthogonal to the direction that center axis C of rotary shaft 21 extends. The plurality of teeth 11a are arranged at equal intervals along the circumferential direction while forming slots 11c between two adjacent teeth 11a. Stator core 11 has twelve teeth 11a. That is, the number of slots of stator 10 is twelve.

An extension portion extending to both sides in the circumferential direction is formed at a distal end of each of extending teeth 11a. An inner peripheral surface located at the distal end of teeth 11a including the extension portion is a magnetic pole surface facing an outer peripheral surface of rotor 20. In two adjacent teeth 11a, there is a gap (slot opening) between the extension portion of one of teeth 11a and the extension portion of the other of teeth 11a.

As illustrated in Fig. 4, yoke 11b is formed in an annular shape that surrounds rotor 20. Yoke 11b is a back yoke located outside the plurality of teeth 11a. Yoke 11b is formed in an annular shape about center axis C of rotary shaft 21.

Coil 12 is a stator coil that is an armature winding of stator 10. Coil 12 is a winding coil wound around stator core 11 so as to generate a magnetic force acting on rotor 20 when a current flows. Specifically, as illustrated in Figs. 3 and 4, coil 12 is formed by a conductive wire wound around each of teeth 11a via insulator 13. Coil 12 is a concentrated winding coil wound around each of teeth 11a. Coil 12 is housed in slot 11c of stator core 11. The conductive wire forming coil 12 is, for example, an insulating coated wire. The conductive wire forming coil 12 includes a conductive wire made of a conductive material such as copper or aluminum as a core wire, and an insulating film coating the conductive wire.

Coil 12 is a three-phase winding that rotates rotor 20 as a three-phase synchronous motor. Specifically, coil 12 includes unit coils of three phases of a U phase, a V phase, and a W phase that are electrically different from each other by 120 degrees. That is, coil 12 wound around each of teeth 11a is energized and driven by three-phase alternating current energized in units of phases of the U phase, the V phase, and the W phase. As a result, a main magnetic flux of stator 10 is generated in each of teeth 11a. That is, each of teeth 11a is a magnetic pole tooth. Each of teeth 11a is an electromagnet that generates a magnetic force when a current flows through coil 12.

Coil 12 of each phase is electrically connected to a circuit board (not illustrated). Specifically, coil 12 of each phase is electrically connected to a winding connection portion of the circuit board via a lead wire, a connection terminal, and the like. The circuit board is a printed wiring board, and a plurality of wirings made of a conductive material such as copper are formed in a predetermined pattern on the printed wiring board. Three winding connection portions corresponding to the U phase, the V phase, and the W phase are formed in each of the plurality of wirings. A plurality of electronic components (not illustrated) for generating a current to be supplied to the plurality of coils 12 of stator 10 are mounted on circuit board. The plurality of electronic components form a power supply circuit that generates three-phase alternating currents of the U phase, the V phase, and the W phase.

As illustrated in Fig. 4, stator core 11 is divided into a plurality of core blocks 110 (divided cores). That is, stator core 11 includes a plurality of core blocks 110. Specifically, stator core 11 is divided into a plurality of core blocks 110 according to the number of teeth 11a. In stator core 11, one tooth 11a exists in each core block 110. Since stator core 11 has twelve teeth 11a, stator core 11 is divided into twelve core blocks 110.

The plurality of core blocks 110 are annularly connected. Specifically, the plurality of core blocks 110 are connected in an annular shape. That is, stator core 11 is formed by coupling the plurality of core blocks 110 in the annular shape. In the present exemplary embodiment, twelve core blocks 110 are arranged in an annular shape. Two adjacent core blocks 110 are connected to each other. Coil 12 is wound around each of the plurality of core blocks 110. Specifically, coil 12 is wound around tooth 11a of each core block 110.

Insulator 13 has a portion interposed between stator core 11 and coil 12. Insulator 13 covers stator core 11. Specifically, insulator 13 covers at least tooth 11a of stator core 11. Similarly to coil 12, insulator 13 is provided in each of the plurality of teeth 11a. That is, stator 10 includes the plurality of insulators 13.

As illustrated in Figs. 4 and 5, one core block 110, one coil 12, and one insulator 13 form stator block 100. Stator block 100 is an intermediate assembly used for stator 10. That is, stator block 100 is an intermediate part used when stator 10 is manufactured. Stator 10 includes a plurality of stator blocks 100. As illustrated in Figs. 4 and 5, stator 10 is configured by annularly connecting a plurality of stator blocks 100. As an example, stator 10 is formed by connecting twelve stator blocks 100 in an annular shape. In stator 10, two adjacent stator blocks 100 are connected. Two connected stator blocks 100 form stator block connected structure 101.

Rotor 20 illustrated in Figs. 2 to 4 rotates by a magnetic force generated by stator 10. In rotor 20, a plurality of N poles and S poles that generate magnetic flux in the rotation direction (circumferential direction) are alternately and repeatedly present. As a result, rotor 20 generates a magnetic force acting on stator 10. The direction of the magnetic flux generated by rotor 20 is a direction orthogonal to the direction (axial direction) that center axis C of rotary shaft 21 extends. That is, the direction of the magnetic flux generated by rotor 20 is the radial direction.

As illustrated in Figs. 3 and 4, rotor 20 includes rotary shaft 21, rotor core 22, and permanent magnet 23. Rotor 20 is a permanent magnet embedded-type rotor (interior permanent magnet (IPM) rotor), and permanent magnet 23 is embedded in rotor core 22. Therefore, motor 1 is an IPM motor.

Rotary shaft 21 is an elongated shaft. Rotary shaft 21 is a metal rod, for example. Rotary shaft 21 is fixed to rotor core 22. Specifically, rotary shaft 21 is inserted into a through hole formed at a center of rotor core 22 and fixed to rotor core 22 so as to extend on both sides of rotor core 22 in the direction that center axis C extends. Rotary shaft 21 is fixed to rotor core 22 via a holder that holds rotor core 22. However, the present disclosure is not limited to this configuration. For example, rotary shaft 21 may be directly fixed to rotor core 22 by being press-fitted or shrink-fitted into a through hole of rotor core 22.

Rotor core 22 is a stacked body, and a plurality of steel plates are stacked in a direction (axial direction) that center axis C of rotary shaft 21 extends. Each of the plurality of steel plates is a punched electromagnetic steel plate formed in a predetermined shape, for example. The plurality of steel plates are fixed to each other by, for example, crimping. Rotor core 22 is not limited to a stacked body of a plurality of steel plates. Rotor core 22 may be a bulk body made of a magnetic material.

Permanent magnet 23 is inserted into a magnet insertion hole formed in rotor core 22. Ten magnet insertion holes are formed in rotor core 22 at equal intervals in the circumferential direction. Therefore, rotor 20 has ten permanent magnets 23 disposed at equal intervals in the circumferential direction. That is, the number of poles of motor 1 is ten. Permanent magnet 23 is a sintered magnet, but may be a bonded magnet.

As illustrated in Fig. 3, rotary shaft 21 of rotor 20 is supported by first bearing 30 and second bearing 40. First bearing 30 and second bearing 40 are bearings that rotatably support rotary shaft 21. First bearing 30 supports a portion of rotary shaft 21 protruding from one side of rotor core 22. On the other hand, second bearing 40 supports a portion of rotary shaft 21 protruding from the other side of rotor core 22. First bearing 30 and second bearing 40 are ball bearings, for example. However, first bearing 30 and second bearing 40 are not limited thereto. For example, first bearing 30 and second bearing 40 may be other bearings such as thrust bearings.

First bracket 50 holds first bearing 30. Specifically, first bearing 30 is housed and fixed in recess 50a formed in first bracket 50. Second bracket 60 holds second bearing 40. Specifically, second bearing 40 is housed and fixed in recess 60a formed in second bracket 60. First bracket 50 and second bracket 60 are each made of a metallic material or a resin material.

First bracket 50 and second bracket 60 form an exterior of motor 1. That is, first bracket 50 and second bracket 60 are outer shell members of motor 1. First bracket 50 is a bottomed cylindrical frame (casing) having an opening as a whole. On the other hand, second bracket 60 is a bottom plate that closes the opening of first bracket 50. First bracket 50 and second bracket 60 are each made of a metallic material or a resin material. For example, first bracket 50 is a metal frame made of metal, and second bracket 60 is a resin plate made of resin.

First bracket 50 includes through hole 50b (first through hole) that rotary shaft 21 of rotor 20 passes through. A part of rotary shaft 21 protrudes from first bracket 50 to the outside through through hole 50b. The part of rotary shaft 21 protruding outward from first bracket 50 includes a load such as a rotary fan. That is, in rotary shaft 21, the part protruding from first bracket 50 is an output shaft.

As illustrated in Fig. 3, first bracket 50 has bracket protrusion 51 protruding outward in a direction that center axis C of rotary shaft 21 extends. Bracket protrusion 51 includes bracket top plate part 51a including through hole 50b, and bracket side plate part 51b erected from an outer peripheral end of bracket top plate part 51a. Specifically, bracket protrusion 51 is formed in a bottomed cylindrical shape. Therefore, bracket top plate part 51a has a disk shape. Bracket side plate part 51b has a cylindrical shape. By providing bracket protrusion 51, a step is formed on the bottom plate part of first bracket 50. An inner portion of bracket protrusion 51 is recess 50a.

As illustrated in Figs. 1 and 2, first bracket 50 includes a plurality of heat dissipation fins 52. Each of the plurality of heat dissipation fins 52 has a plate shape. The plurality of heat dissipation fins 52 are provided in first bracket 50 at equal intervals along the circumferential direction. Each of the plurality of heat dissipation fins 52 is formed to extend from an outer peripheral end of the bottom plate part of first bracket 50 to a cylindrical side wall portion.

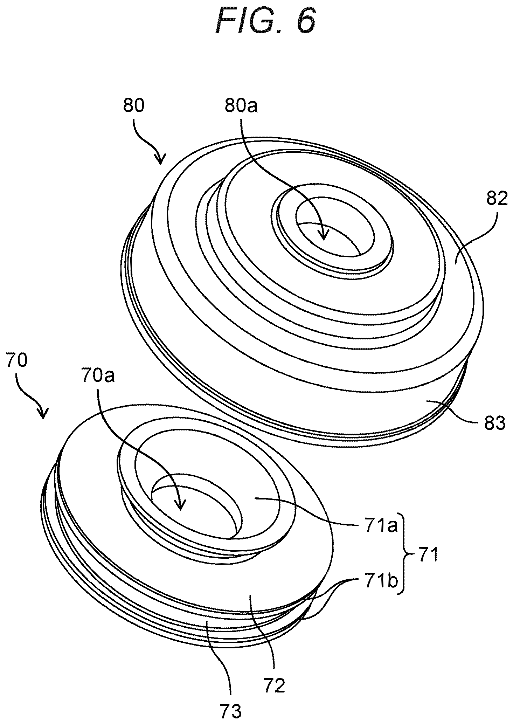

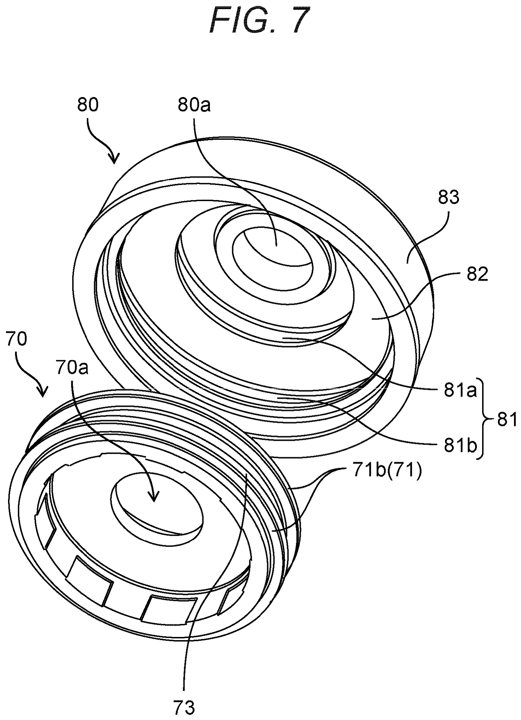

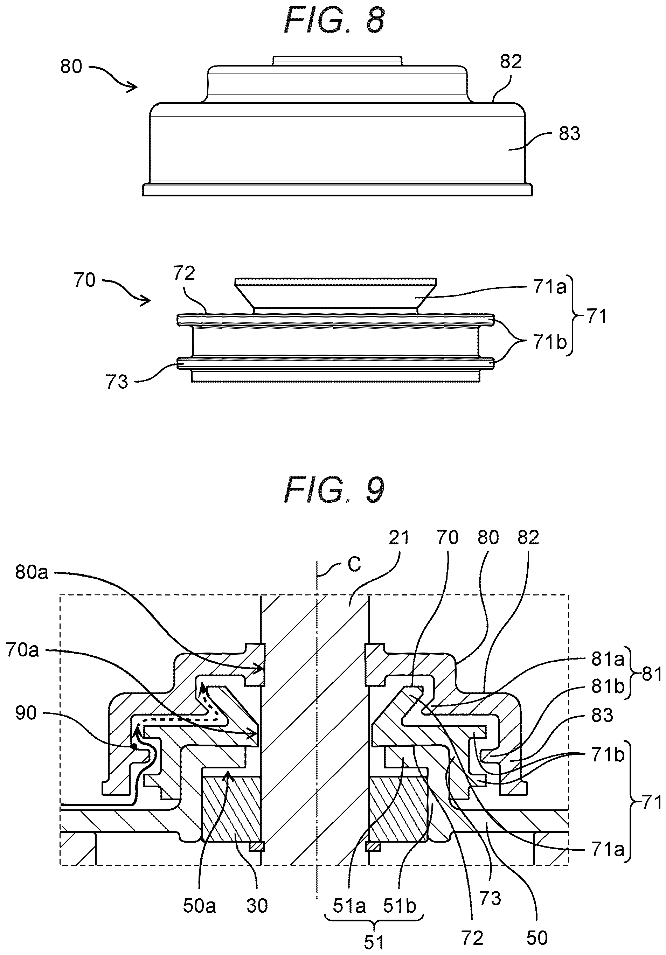

Detailed configurations of first cover 70 and second cover 80 will be described with reference to Figs. 6 to 9. Fig. 6 is a perspective view of first cover 70 and second cover 80 in a separated state when viewed obliquely from above. Fig. 7 is a perspective view of first cover 70 and second cover 80 in a separated state when viewed obliquely from below. Fig. 8 is a side view of first cover 70 and second cover 80 in a separated state. Fig. 9 is an enlarged view of a region IX surrounded by a broken line in Fig. 3.

As illustrated in Fig. 9, first cover 70 is an inner cover located inside second cover 80. First cover 70 is fixed to first bracket 50. First cover 70 includes through hole 70a (second through hole) that rotary shaft 21 passes through. Rotary shaft 21 passes through through hole 70a. That is, rotary shaft 21 penetrating through through hole 70a is not in contact with first cover 70. There is a gap between rotary shaft 21 and an inner surface of through hole 70a. Therefore, even when rotary shaft 21 rotates, first cover 70 does not rotate.

Second cover 80 is an outer cover located outside first cover 70. Second cover 80 covers first cover 70 without coming into contact with first cover 70. That is, second cover 80 and first cover 70 are separated from each other. Second cover 80 is not in contact with first bracket 50 either.

Second cover 80 is fixed to rotary shaft 21 instead of first bracket 50. Therefore, in a case where rotary shaft 21 rotates, second cover 80 rotates together with rotary shaft 21. In the present exemplary embodiment, second cover 80 includes through hole 80a (third through hole) that rotary shaft 21 passes through. Second cover 80 is fixed to rotary shaft 21 with rotary shaft 21 passing through through hole 80a. In this case, second cover 80 and rotary shaft 21 are in contact with each other. For example, rotary shaft 21 and second cover 80 can be fixed by press-fitting rotary shaft 21 into through hole 80a. Second cover 80 may be fixed to rotary shaft 21 without being in contact with rotary shaft 21. For example, a bush or the like may be inserted between through hole 80a and rotary shaft 21, and second cover 80 and rotary shaft 21 may be fixed with a screw or the like.

As illustrated in Figs. 6 to 9, a plurality of outer protrusions 71 protruding outward are arranged on a surface of an outer side (side of second cover 80) of first cover 70. That is, the plurality of outer protrusions 71 protrude toward second cover 80. As illustrated in Fig. 9, the plurality of outer protrusions 71 are wall portions having a plate shape in a cross-sectional view. As illustrated in Figs. 6 to 8, the plurality of outer protrusions 71 have an annular shape. When a direction that center axis C of rotary shaft 21 extends is an axial direction, a direction orthogonal to the axial direction is a radial direction, and a direction inclined with respect to the axial direction and the radial direction is a tilt direction, each of the plurality of outer protrusions 71 protrudes in one of the axial direction, the radial direction, and the tilt direction.

As illustrated in Fig. 9, first cover 70 includes inner top plate part 72 and inner side plate part 73. Inner top plate part 72 has a flat plate shape. Inner top plate part 72 faces bracket top plate part 51a of bracket protrusion 51 of first bracket 50. Specifically, inner top plate part 72 is in surface contact with bracket top plate part 51a. Through hole 70a of first cover 70 is formed in a central portion of inner top plate part 72. Inner side plate part 73 is erected from the outer peripheral end of inner top plate part 72. Inner side plate part 73 faces bracket side plate part 51b of bracket protrusion 51 of first bracket 50. Specifically, inner side plate part 73 has a cylindrical shape. Inner side plate part 73 is in surface contact with bracket side plate part 51b. First cover 70 is fixed to first bracket 50 by press-fitting inner side plate part 73 into bracket protrusion 51 of first bracket 50.

The plurality of outer protrusions 71 of first cover 70 include first outer protrusion 71a and second outer protrusion 71b that protrude in directions different from each other. First outer protrusion 71a is an annular inclined wall protruding in an oblique direction. First outer protrusion 71a is arranged on the outer surface of inner top plate part 72. That is, first outer protrusion 71a protrudes in an oblique direction from the outer surface of inner top plate part 72. On the other hand, second outer protrusion 71b is an annular horizontal wall protruding in the radial direction (lateral direction). Second outer protrusion 71b is arranged on the outer surface of inner side plate part 73. That is, second outer protrusion 71b protrudes outward in the radial direction from the outer surface of inner side plate part 73.

A plurality of inner protrusions 81 protruding inward is arranged on a surface of an inner side (first cover 70) of second cover 80. That is, the plurality of inner protrusions 81 protrude toward first cover 70. When a direction that center axis C of rotary shaft 21 extends is an axial direction, a direction orthogonal to the axial direction is a radial direction, and a direction inclined with respect to the axial direction and the radial direction is a tilt direction, each of the plurality of inner protrusions 81 protrudes in any of the axial direction, the radial direction, and the tilt direction.

Second cover 80 includes outer top plate part 82 and outer side plate part 83. Outer top plate part 82 faces inner top plate part 72 of first cover 70. Outer top plate part 82 and inner top plate part 72 are separated from each other. Outer top plate part 82 and inner top plate part 72 are disposed at a predetermined distance. Outer top plate part 82 has a step, and a central portion protrudes outward. Outer side plate part 83 is erected from the outer peripheral end of outer top plate part 82. Outer side plate part 83 faces inner side plate part 73 of first cover 70. Outer side plate part 83 and inner side plate part 73 are separated from each other. Outer side plate part 83 and inner side plate part 73 are disposed at a predetermined distance. Second cover 80 and first bracket 50 are not in contact with each other. Therefore, there is a gap between the distal end of outer side plate part 83 and bracket top plate part 51a of first bracket 50.

The plurality of inner protrusions 81 of second cover 80 include first inner protrusion 81a and second inner protrusion 81b that protrude in directions different from each other. First inner protrusion 81a is an annular inclined wall protruding in an oblique direction. First inner protrusion 81a is arranged on the inner surface of outer top plate part 82. That is, first inner protrusion 81a protrudes in an oblique direction from the inner surface of outer top plate part 82. On the other hand, second inner protrusion 81b is an annular horizontal wall protruding in the radial direction (lateral direction). Second inner protrusion 81b is arranged on the inner surface of outer side plate part 83. That is, second inner protrusion 81b protrudes radially inward from the inner surface of outer side plate part 83.

First outer protrusion 71a of first cover 70 and first inner protrusion 81a of second cover 80 face each other. First outer protrusion 71a of first cover 70 and first inner protrusion 81a of second cover 80 protrude in directions opposite to each other along the same orientation. Therefore, first outer protrusion 71a and first inner protrusion 81a have parallel surfaces. Specifically, first outer protrusion 71a and first inner protrusion 81a both protrude in tilt directions inclined with respect to the radial direction and in directions opposite to each other, and have inclined surfaces parallel to each other. By providing first outer protrusion 71a and first inner protrusion 81a, a first meandering path is formed between inner top plate part 72 of first cover 70 and outer top plate part 82 of second cover 80.

Second outer protrusion 71b of first cover 70 and second inner protrusion 81b of second cover 80 face each other. Second outer protrusion 71b of first cover 70 and second inner protrusion 81b of second cover 80 protrude in directions opposite to each other along the same orientation. Therefore, second outer protrusion 71b and second inner protrusion 81b have parallel surfaces. Specifically, second outer protrusion 71b and second inner protrusion 81b both protrude in the radial direction and in directions opposite to each other, and have parallel horizontal planes. By providing second outer protrusion 71b and second inner protrusion 81b, a second meandering path is formed between inner side plate part 73 of first cover 70 and outer side plate part 83 of second cover 80.

As described above, the plurality of outer protrusions 71 and the plurality of inner protrusions 81 exist between first cover 70 and second cover 80. Therefore, a labyrinth structure is formed by the plurality of outer protrusions 71 and the plurality of inner protrusions 81.

Specifically, first outer protrusion 71a and first inner protrusion 81a are alternately present between inner top plate part 72 of first cover 70 and outer top plate part 82 of second cover 80. Second outer protrusion 71b and second inner protrusion 81b are alternately present between inner side plate part 73 of first cover 70 and outer side plate part 83 of second cover 80. Second cover 80 includes two second inner protrusions 81b. One second outer protrusion 71b exists between two second inner protrusions 81b.

First cover 70 and second cover 80 are rubber covers made of a rubber material. Therefore, first cover 70 and second cover 80 have rubber elasticity. First cover 70 fixed to first bracket 50 functions as a drip-proof rubber. Second cover 80 fixed to rotary shaft 21 and rotating functions as a draining rubber.

As the rubber material forming first cover 70 and second cover 80, a polychloroprene rubber (CR) having excellent impact resilience and aging resistance, an ethylene propylene rubber (EPDM) having a small specific gravity and excellent heat resistance, cold resistance, and aging resistance, or the like can be used. First cover 70 and second cover 80 may be made of the same rubber material, or may be made of different rubber materials. In a case where first cover 70 and second cover 80 are made of different rubber materials, first cover 70 on the inner side (drip-proof rubber) is preferably made of polychloroprene rubber, and second cover 80 on the outer side (draining rubber) is preferably made of ethylene propylene rubber. The elastic force of the rubber material forming second cover 80 on the outer side is preferably higher than the elastic force of the rubber material forming first cover 70 on the inner side. First cover 70 and second cover 80 may be made of a material other than a rubber material. For example, first cover 70 and second cover 80 may be made of a resin material or a metallic material other than a rubber material. However, at least second cover 80 fixed to rotary shaft 21 among first cover 70 and second cover 80 is preferably made of a rubber material.

In motor 1 having the configuration as described above, when coil 12 of stator 10 is energized, a field current flows through coil 12, and a magnetic flux is generated in stator 10 (stator core 11). As a result, a magnetic flux directed from stator 10 toward rotor 20 is generated. Specifically, a magnetic flux directed from each of the plurality of teeth 11a of stator core 11 of stator 10 toward rotor core 22 of rotor 20 is generated. In rotor 20, a magnetic flux passing through stator 10 is generated by permanent magnet 23 of rotor core 22. The magnetic flux generated in stator 10 and the magnetic flux generated from permanent magnet 23 of rotor 20 interact with each other to generate a magnetic force that becomes a torque to rotate rotor 20. As a result, rotor 20 rotates.

As described above, in motor 1 according to the present exemplary embodiment, the plurality of outer protrusions 71 protruding outward are arranged on the surface of first cover 70, which is the inner cover fixed to first bracket 50, on the side of second cover 80. The plurality of inner protrusions 81 protruding inward are arranged on the surface of second cover 80, which is an outer cover fixed to rotary shaft 21, on the side of first cover 70. The plurality of outer protrusions 71 include a first outer protrusion 71a and a second outer protrusion 71b that protrude in directions different from each other. The plurality of inner protrusions 81 include a first inner protrusion 81a and a second inner protrusion 81b that protrude in directions different from each other. First outer protrusion 71a and first inner protrusion 81a face each other. Second outer protrusion 71b and second inner protrusion 81b face each other.

With this configuration, the protruding directions of first outer protrusion 71a and first inner protrusion 81a are different from the protruding directions of second outer protrusion 71b and second inner protrusion 81b. Therefore, the path (foreign matter entry path) between first cover 70 and second cover 80 can be made three-dimensional and long. Therefore, a three-dimensional complicated labyrinth structure can be formed between first cover 70 and second cover 80. As a result, for example, as illustrated in Fig. 9, even if water 90 enters from the gap between first cover 70 and second cover 80 (solid arrow), it is possible to suppress water 90 from reaching the vicinity of rotary shaft 21 (broken arrow). Therefore, it is possible to suppress entry of foreign matter such as water or dust into motor 1 without providing a labyrinth structure having a special shape in first bracket 50.

Moreover, it is possible to form a labyrinth structure capable of suppressing intrusion of foreign matter without forming a special shape in first bracket 50 which is an exterior of the motor. As a result, the processing cost of first bracket 50 can be reduced as compared with the case where first bracket 50 is provided with the uneven shape to form the labyrinth structure. Further, first bracket 50 can be widely used for motors 1 of different types. In addition, after stator 10 and rotor 20 are housed in a casing surrounded by first bracket 50 and second bracket 60, first cover 70 and second cover 80 having a labyrinth structure can be retrofitted. Therefore, as a result, motor 1 having high waterproof performance and dust-proof performance can be realized.

In motor 1, first outer protrusion 71a of first cover 70 is arranged on inner top plate part 72 of first cover 70, and second outer protrusion 71b of first cover 70 is arranged on inner side plate part 73 of first cover 70. First inner protrusion 81a of second cover 80 is arranged on outer top plate part 82 of second cover 80, and second inner protrusion 81b of second cover 80 is arranged on outer side plate part 83 of second cover 80.

With this configuration, for example, as illustrated in Fig. 9, even if water 90 enters between inner side plate part 73 of first cover 70 and outer side plate part 83 of second cover 80, it is possible to suppress water 90 from entering between inner top plate part 72 of first cover 70 and outer top plate part 82 of second cover 80. As a result, it is possible to further suppress intrusion of foreign matter such as water or dust into motor 1.

In addition, in motor 1, first outer protrusion 71a and first inner protrusion 81a protrude in directions opposite to each other along the same orientation, and second outer protrusion 71b and second inner protrusion 81b protrude in directions opposite to each other along the same orientation. Specifically, first outer protrusion 71a and first inner protrusion 81a protrude in tilt directions inclined with respect to the axial direction and the radial direction of rotary shaft 21 and in directions opposite to each other, and second outer protrusion 71b and second inner protrusion 81b protrude in radial directions and in directions opposite to each other.

In this manner, by forming first outer protrusion 71a and first inner protrusion 81a as wall portions protruding in the tilt direction between first cover 70 and second cover 80, a barbed structure is formed by the wall portions protruding in the tilt direction. As a result, the foreign matter that has entered between first cover 70 and second cover 80 is suppressed from moving further by the barbed structure. As a result, it is possible to further suppress the foreign matter such as water or dust from reaching a part near rotary shaft 21. Therefore, it is possible to further suppress intrusion of foreign matter such as water or dust into motor 1.

In motor 1, first cover 70 and second cover 80 are rubber covers made of a rubber material.

Since second cover 80 is made of a rubber material, second cover 80 can be fixed in close contact with rotary shaft 21. For example, by press-fitting rotary shaft 21 into through hole 80a of second cover 80, second cover 80 can be fixed in close contact with rotary shaft 21 without a gap between rotary shaft 21 and through hole 80a. Since first cover 70 is made of a rubber material, first cover 70 can be easily fixed to bracket protrusion 51 of first bracket 50. For example, by press-fitting first cover 70 into bracket protrusion 51 of first bracket 50, first cover 70 can be fixed in close contact with bracket protrusion 51 of first bracket 50. In addition, since first cover 70 and second cover 80 are made of a rubber material, first cover 70 and second cover 80 can be easily fixed as compared with an oil seal generally used for shaft sealing. In addition, it is possible to reduce the cost and increase the life.

Moreover, since first cover 70 is made of a rubber material, first outer protrusion 71a and second outer protrusion 71b projecting in different directions can be easily formed on one first cover 70. Similarly, when second cover 80 is made of a rubber material, first inner protrusion 81a and second inner protrusion 81b projecting in different directions can be easily formed on one second cover 80.

In motor 1, a wall portion protruding in a tilt direction and in opposite directions to each other is formed between first cover 70 and second cover 80, by first outer protrusion 71a and first inner protrusion 81a. Along with this, second outer protrusion 71b and second inner protrusion 81b form wall portions protruding in the radial direction and in directions opposite to each other. However, the present disclosure is not limited to this configuration.

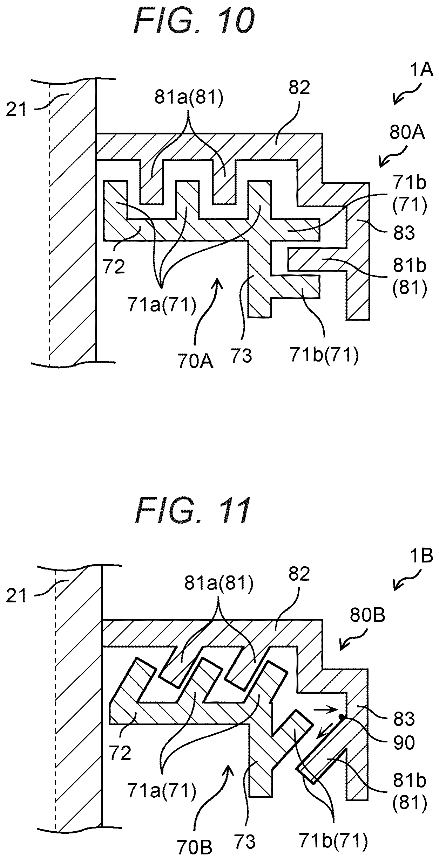

For example, as in motor 1A illustrated in Fig. 10, first outer protrusion 71a of first cover 70A and first inner protrusion 81a of second cover 80A may protrude in the axial direction of rotary shaft 21 and in directions opposite to each other, and second outer protrusion 71b of first cover 70A and second inner protrusion 81b of second cover 80A may protrude in the radial direction and in directions opposite to each other. Fig. 10 is an enlarged cross-sectional view of a main part of motor 1A according to Modification 1. That is, as illustrated in Fig. 10, wall portions protruding in the axial direction (longitudinal direction) of rotary shaft 21 and in opposite directions to each other are formed between first cover 70A and second cover 80A, by first outer protrusion 71a and first inner protrusion 81a. A wall portion protruding in the radial direction (lateral direction) and in directions opposite to each other may be formed between first cover 70A and second cover 80A, by second outer protrusion 71b and second inner protrusion 81b.

Fig. 11 is an enlarged cross-sectional view of a main part of motor 1B according to Modification 2. As in motor 1B illustrated in Fig. 11, first outer protrusion 71a of first cover 70B and first inner protrusion 81a of second cover 80B may protrude in the tilt direction and in directions opposite to each other. In addition, second outer protrusion 71b of first cover 70B and second inner protrusion 81b of second cover 80B may also protrude in the tilt direction and in directions opposite to each other. That is, as illustrated in Fig. 11, only a wall portion protruding in the tilt direction and in directions opposite to each other may be formed between first cover 70B and second cover 80B, by first outer protrusion 71a and first inner protrusion 81a, and second outer protrusion 71b and second inner protrusion 81b.

In this case, as illustrated in Fig. 11, by inclining second outer protrusion 71b arranged on inner side plate part 73 of first cover 70B obliquely upward and inclining second inner protrusion 81b arranged on outer side plate part 83 of second cover 80B obliquely downward, it is possible to splash water 90 outward toward outer side plate part 83 of second cover 80B by the centrifugal force when rotary shaft 21 rotates as indicated by a thick arrow. When the rotation of rotary shaft 21 is stopped, water 90 falls along the surface of second inner protrusion 81b inclined obliquely downward (see thick arrows). That is, water 90 escapes from between first cover 70B and second cover 80B. As described above, by using the rotation and stop of rotary shaft 21, it is possible to effectively suppress water 90 from entering.

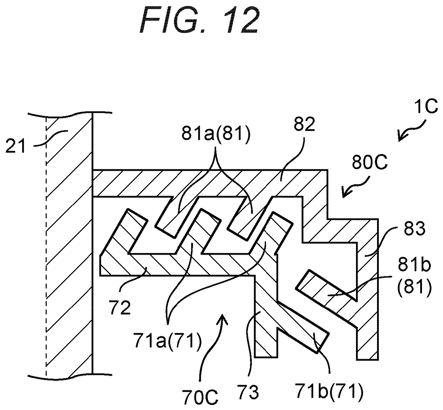

Fig. 12 is an enlarged cross-sectional view of a main part of motor 1C according to Modification 3. As in motor 1C illustrated in Fig. 12, second outer protrusion 71b arranged on inner side plate part 73 of first cover 70C may be inclined obliquely downward. In addition, second inner protrusion 81b provided on outer side plate part 83 of second cover 80C may be inclined obliquely upward.

### (Modifications)

The present disclosure has been described above based on the exemplary embodiments. The present disclosure is not limited to the exemplary embodiment described above.

For example, in the above exemplary embodiment, stator 10 includes molding resin 14. However, the present disclosure is not limited to this configuration. That is, stator 10 may not include molding resin 14.

In the above exemplary embodiment, rotor 20 is an IPM rotor. However, the present disclosure is not limited to this configuration. For example, rotor 20 may be a surface magnet type rotor (SPM rotor) that includes a plurality of permanent magnets on the outer surface of the rotor core.

In the above exemplary embodiment, motor 1 has 10 poles and 12 slots. However, the present disclosure is not limited to this configuration. That is, the number of slots of stator 10 is not limited to twelve. The number of magnetic poles of rotor 20 is not limited to ten (i.e., ten permanent magnets 23). Any number of slots of stator 10 and any number of magnetic poles of rotor 20 can be applied.

In the above exemplary embodiment, motor 1 is a brushless motor. However, the present disclosure is not limited to this configuration. For example, motor 1 may be a commutator motor with a brush. That is, the technology of the present disclosure can also be applied to a commutator motor.

In addition, the present disclosure also includes a mode obtained by applying various modifications conceived by those skilled in the art to each of the above exemplary embodiments and modifications, or a mode realized by arbitrarily combining components and functions in the above exemplary embodiments without departing from the gist of the present disclosure.

### INDUSTRIAL APPLICABILITY

The technology of the present disclosure can be widely used for a motor, an electric device including the motor, and the like.

### REFERENCE MARKS IN THE DRAWINGS

- 1, 1A, 1B, 1C: motor
- 10: stator
- 11: stator core
- 11a: tooth
- 11b: yoke
- 11c: slot
- 12: coil
- 13: insulator
- 14: molding resin
- 20: rotor
- 21: rotary shaft
- 22: rotor core
- 23: permanent magnet
- 30: first bearing
- 40: second bearing
- 50: first bracket
- 50a: recess
- 50b: through hole (first through hole)
- 51: bracket protrusion
- 51a: bracket top plate part
- 51b: bracket side plate part
- 52: heat dissipation fin
- 60: second bracket
- 60a: recess
- 70, 70A, 70B, 70C: first cover
- 70a: through hole (second through hole)
- 71: outer protrusion
- 71a: first outer protrusion
- 71b: second outer protrusion
- 72: inner top plate part
- 73: inner side plate part
- 80, 80A, 80B, 80C: second cover
- 80a: through hole (third through hole)
- 81: inner protrusion
- 81a: first inner protrusion
- 81b: second inner protrusion
- 82: outer top plate part
- 83: outer side plate part
- 100: stator block
- 101: stator block connected structure
- 110: core block

## Claims

1. A motor comprising:
a rotor including a rotary shaft extending in an axial direction, the axial direction being a direction that a center axis extends;
a bracket including a first through hole that the rotary shaft passes through;
a first cover including a second through hole that the rotary shaft passes through, the first cover being an inner cover fixed to the bracket; and
a second cover fixed to the rotary shaft, the second cover being an outer cover covering the first cover,
wherein the first cover includes a plurality of outer protrusions protruding outward on a surface of a side of the second cover,
the second cover includes a plurality of inner protrusions protruding inward on a surface of a side of the first cover,
the plurality of outer protrusions include a first outer protrusion and a second outer protrusion that protrude in directions different from each other,
the plurality of inner protrusions include a first inner protrusion and a second inner protrusion that protrude in directions different from each other,
the first outer protrusion and the first inner protrusion face each other, and
the second outer protrusion and the second inner protrusion face each other.

2. The motor according to Claim 1, wherein
the bracket includes a bracket protrusion protruding outward,
the bracket protrusion includes a bracket top plate part including the first through hole and a bracket side plate part erected from an outer peripheral end of the bracket top plate part,
the first cover includes an inner top plate part including the second through hole and facing the bracket top plate part, and an inner side plate part erected from an outer peripheral end of the inner top plate part and facing the bracket side plate part,
the second cover includes an outer top plate part facing the inner top plate part, and an outer side plate part erected from an outer peripheral end of the outer top plate part and facing the inner side plate part,
the first outer protrusion is arranged on the inner top plate part,
the second outer protrusion is arranged on the inner side plate part,
the first inner protrusion is arranged on the outer top plate part, and
the second inner protrusion is arranged on the outer side plate part.

3. The motor according to claim 1 or 2, wherein
the first outer protrusion and the first inner protrusion protrude in directions opposite to each other along a same orientation, and
the second outer protrusion and the second inner protrusion protrude in directions opposite to each other along a same orientation.

4. The motor according to claim 1 or 2, wherein
in a case where a direction orthogonal to the axial direction is a radial direction and a direction inclined with respect to the axial direction and the radial direction is a tilt direction,
each of the plurality of outer protrusions and the plurality of inner protrusions protrudes in one of the axial direction, the radial direction, and the tilt direction.

5. The motor according to claim 1 or 2, wherein the first cover and the second cover are rubber covers made of a rubber material.

6. The motor according to claim 5, wherein an elastic force of a rubber material forming the second cover is higher than an elastic force of a rubber material forming the first cover.

7. The motor according to claim 5, wherein the second cover is fixed to the rotary shaft by press-fitting the rotary shaft into a third through hole formed in the second cover.
